# EUROPEAN PATENT SPECIFICATION

(11) **EP 3 178 872 B1**
(45) Date of publication and mention of the grant of the patent: **19.06.2019**
(21) Application number: 15829799.4
(22) Date of filing: 05.08.2015
(51) Int. Cl.: C08J 9/08, C08K 3/26, C08K 5/09, C08L 71/02, C08J 9/00, C08L 71/00, C08L 83/12

(54) **MODIFIED SILICONE RESIN FOAMED BODY**
MODIFIZIERTER SILIKONHARZSCHAUMSTOFFKÖRPER
CORPS EXPANSÉ DE RÉSINE SILICONE MODIFIÉ

(30) Priority: 06.08.2014 JP 2014160198
(43) Date of publication of application: 14.06.2017
(73) Proprietor: Kaneka Corporation, Osaka-shi, Osaka 530-8288 (JP)
(72) Inventor: KATANO Chiaki, Settsu-shi Osaka 566-0072 (JP); SHIBAYA Miaki, Settsu-shi Osaka 566-0072 (JP)
(74) Representative: Vossius & Partner Patentanwälte Rechtsanwälte mbB
(86) International application number: PCT/JP2015/072212
(87) International publication number: WO 2016/021630

(56) References cited:
- WO-A1-03/087204
- WO-A1-2005/007745
- JP-A- 2000 095 942
- JP-A- 2000 095 942
- JP-A- 2001 098 098
- JP-A- 2001 098 098
- JP-A- 2005 105 180
- JP-A- 2013 076 047
- US-A1- 2006 173 121

## Description

### TECHNICAL FIELD

The present invention relates to a modified silicone resin foam obtained by curing a foamable liquid resin composition containing a polymer containing a silicon-containing group (silyl group), a silanol condensation catalyst, and a chemical foaming agent, wherein the silyl group contains a hydrolyzable group bonded to a silicon atom and can be crosslinked by forming a siloxane bond (hereinafter, such a silyl group is referred to as "a reactive silyl group").

### BACKGROUND ART

Among foams of polymers, foams formed from thermoplastic resins (e.g. polystyrene, polyethylene, polypropylene, and polyvinyl chloride) in the form of beads, sheets, or boards have been used in fields such as civil engineering and construction, packaging, home electronics, and automobiles due to their advantageous properties such as insulation, lightweight, and cushioning. These foams all require large-scale facilities for producing formed articles. Moreover, these foams are usually hard.

Polyurethane foams are well known as foams obtained by curing and foaming of liquid resin compositions using thermosetting resins. Polyurethane foams can be easily formed in small-scale facilities, and can be produced as soft foams as well (Patent Literature 1); however, the flexibility of the polyurethane foams is not sufficient, and the texture thereof is not good. Therefore, there is a demand for foams that are easy to form and that have flexibility and good texture.

Meanwhile, foams can also be produced from modified silicone resins depending on the conditions. Patent Literature 2 discloses a cured product containing a modified silicone resin and pre-foamed hollow particles; however, the produced cured product is not a foam and has high hardness with a lack of flexibility. Patent Literature 3 discloses a modified silicone resin foam which has better texture than the conventional flexible polyurethane foams and also shows excellent flexibility with low hardness and low rebound resilience, and which is suitable as a material for bedclothes, various cushion materials, and the like. However, since the curing of the foam involves a hydrosilylation reaction, highly-explosive hydrogen gas can be generated as a by-product during the foam production depending on the use conditions.

Patent Literature 4 discloses a silicone resin foam obtained from a composition comprising a silyl modified polyalkylene ether, azodicarbonamide as a chemical foaming agent and a tin-based silanol condensation catalyst.

Patent Literature 5 discloses a curable composition comprising a silyl modified polyoxyalkylene polymer and a silanol condensation catalyst.

Patent Literature 6 discloses a foam obtained from a composition comprising a polyolefin resin, a silyl substituted polyolefin resin, a silanol condensation catalyst as a crosslinker and a foaming agent.

### CITATION LIST

### PATENT LITERATURE

Patent Literature 1: JP-A 2006-131755
Patent Literature 2: JP-A 2013-237815
Patent Literature 3: JP-A 2009-114300
Patent Literature 4: JP 2000 095942
Patent Literature 5: US 2006/173121
Patent Literature 6: JP 2001 098098

### SUMMARY OF INVENTION

### TECHNICAL PROBLEM

In view of the above, the present invention aims to provide a modified silicone resin foam that can be foamed without generating hydrogen as a by-product, while maintaining excellent texture and flexibility.

### SOLUTION TO PROBLEM

As a result of extensive research on the above problems, the present inventors have found that when a polymer containing a reactive silyl group and having a backbone composed of oxyalkylene units is combined with a silanol condensation catalyst and a chemical foaming agent, as defined in claim 1, it is possible to produce a modified silicone resin foam having high flexibility without generating highly explosive hydrogen gas as a by-product during the foam production. Thus, the present invention has been achieved.

Specifically, the present invention has the following features.
1) A modified silicone resin foam, obtained by curing a foamable liquid resin composition, the foamable liquid resin composition comprising 100 parts by weight of a base resin (A), 0.1 to 5 parts by weight of a silanol condensation catalyst (B), and 2 to 40 parts by weight of a chemical foaming agent (C),
   the base resin (A) comprising a polymer having in its molecular chain at least one silyl group that contains a hydrolyzable group bonded to a silicon atom and can be crosslinked by forming a siloxane bond, the polymer having a backbone composed of oxyalkylene units,
   the silanol condensation catalyst (B)and the foaming agent being as defined in claim 1, and the foam having an ASKER FP hardness of 60 or less in a 25°C atmosphere.
2) The modified silicone resin foam according to item 1), wherein the backbone of the polymer is composed of oxypropylene repeating units.
3) The modified silicone resin foam according to item 1) or 2), wherein the polymer has a number average molecular weight of at least 3000 but not more than 100000.
4) The modified silicone resin foam according to item 1), wherein the organic acids are polyvalent carboxylic acids.
5) The modified silicone resin foam according to item 1), wherein the organic acid salts are metal salts of polyvalent carboxylic acids.
6) The modified silicone resin foam according to any one of items 1) to 5), wherein the foam has a density of at least 10 kg/m³ but not more than 900 kg/m³.
7) A method for producing the modified silicone resin foam defined in any one of items 1) to 6).
8) The method for producing the modified silicone resin foam according to item 7), the method comprising injecting the foamable liquid resin composition into a mold, followed by foaming and curing.
9) The method for producing the modified silicone resin foam according to item 7) or 8), the method comprising foaming the foamable liquid resin composition before or simultaneously with curing.

### ADVANTAGEOUS EFFECTS OF INVENTION

The modified silicone resin foam of the present invention can be formed without generating hydrogen as a by-product, while maintaining excellent texture and flexibility.

The modified silicone resin foam of the present invention has excellent texture and flexibility and thus is suitable as a material for bedclothes, various cushion materials, and the like. Furthermore, since highly explosive hydrogen gas is not generated in the reaction during the production of the foam, the foam can be produced in facilities with low equipment burden.

### DESCRIPTION OF EMBODIMENTS

The present invention is described in detail below.

The modified silicone resin foam of the present invention is obtained by curing a foamable liquid resin composition that contains 100 parts by weight of a base resin (A), 0.1 to 5 parts by weight of a silanol condensation catalyst (B), and 2 to 40 parts by weight of a chemical foaming agent (C), (B) and (C) being as disclosed in claim 1. The base resin (A) includes a polymer, and the polymer has in its molecular chain at least one silyl group that contains a hydrolyzable group bonded to a silicon atom and can be crosslinked by forming a siloxane bond, and the polymer has a backbone composed of oxyalkylene units . Moreover, the foam has an ASKER FP hardness of 60 or less in a 25°C atmosphere.

### <Foamable liquid resin composition>

First, the base resin (A), the silanol condensation catalyst (B), and the chemical foaming agent (C), which constitute the foamable liquid resin composition, are described.

### <Base resin (A)>

The polymer according to the present invention which has at least one reactive silyl group in its molecular chain and has a backbone composed of oxyalkylene units is a component that is cured by the silanol condensation catalyst (B). The polymer, which has at least one reactive silyl group in its molecular chain, undergoes a silanol condensation reaction so that it is crosslinked to increase the molecular weight and consequently cured.

The polymer needs to contain at least an average of one reactive silyl group per molecule of the polymer to undergo a condensation reaction by the action of the silanol condensation catalyst (B). The average number of reactive silyl groups is preferably 1.1 or more, more preferably 1.2 or more. At the same time, the average number is preferably 2.5 or less, more preferably 2 or less. If the average number is less than 1, curability may be insufficient. If the average number is more than 2.5, the resulting cured product may be hard. In view of curability and flexibility, the reactive silyl group is preferably present at both ends of the backbone or branch chains.

The average number of reactive silyl groups can be determined by ¹H-NMR quantification.

The reactive silyl group in the polymer contains a hydroxy or hydrolyzable group bonded to a silicon atom and can be crosslinked by forming a siloxane bond through a reaction accelerated by the silanol condensation catalyst. The reactive silyl group may be a group represented by formula (2) :

-SiR¹₃₋ₐXₐ (2)

wherein each R¹ independently represents a C1 to C20 alkyl group, a C6 to C20 aryl group, a C7 to C20 aralkyl group, or a triorganosiloxy group represented by -OSi(R')₃ where each R' independently represents a C1 to C20 hydrocarbon group; each X independently represents a hydroxy group or a hydrolyzable group; and a represents an integer of 1 to 3.

The hydrolyzable group may be any known hydrolyzable group. Specific examples include a hydrogen atom, halogen atoms, and alkoxy, acyloxy, ketoximate, amino, amide, acid amide, aminooxy, mercapto, and alkenyloxy groups. Preferred among these are a hydrogen atom and alkoxy, acyloxy, ketoximate, amino, amide, aminooxy, mercapto, and alkenyloxy groups. Alkoxy groups, which are moderately hydrolyzable and easy to handle, are particularly preferred. Preferred alkoxy groups are methoxy and ethoxy groups.

One to three hydrolyzable or hydroxy groups can be bonded to one silicon atom. When there are two or more bonded hydrolyzable or hydroxy groups in the reactive silyl group, these groups may be the same or different from each other.

In formula (2), the integer a is preferably 2 or 3 in view of curability. In particular, it is preferably 3 when rapid curing is required, and it is preferably 2 when storage stability is required.

Specific examples of R¹ in formula (2) include alkyl groups such as methyl and ethyl groups; cycloalkyl groups such as a cyclohexyl group; aryl groups such as a phenyl group; aralkyl groups such as a benzyl group; and triorganosiloxy groups represented by -OSi(R')₃ where R' is a methyl, phenyl or other groups; a chloromethyl group, and a methoxymethyl group. A methyl group is particularly preferred among these.

More specific examples of the reactive silyl group include trimethoxysilyl, triethoxysilyl, triisopropoxysilyl, dimethoxymethylsilyl, diethoxymethylsilyl, and diisopropoxymethylsilyl groups. Trimethoxysilyl, triethoxysilyl, and dimethoxymethylsilyl groups are preferred because they are highly active to provide good curability.

The polymer may have a linear structure or a branched structure in which the molecular weight of the branches is lower than that of the backbone, but in view of flexibility it preferably has a linear structure.

As for the molecular weight of the polymer, the number average molecular weight Mn is preferably 3000 or more, more preferably 10000 or more, in view of the balance between flexibility/texture and reactivity. The upper limit of the number average molecular weight Mn is not particularly limited, but it is preferably 100000 or less, more preferably 50000 or less, still more preferably 30000 or less. If the Mn is less than 3000, this will not only lead to a decrease in viscosity, making it difficult to allow the curing reaction to proceed, but may also adversely affect texture. If the Mn is more than 100000, this may not only adversely affect texture but may also deteriorate workability due to increase in viscosity.

The number average molecular weight is calculated by GPC calibrated with polystyrene standards.

The base resin (A) may include a combination of two or more polymers. When the base resin (A) is a mixture of two or more polymers, the number average molecular weight of the mixture is preferably in the range indicated above.

Polymers other than those described above may be added to the base resin (A) in order to control flexibility, texture, crosslinked structure, or other properties.

The polymer having a backbone composed of oxyalkylene units can be produced by polymerization of an alkylene oxide using a compound having two or more active hydrogen atoms as a starting material to form the backbone. For example, the polymer may be produced by polymerizing a C₂-C₄ alkylene oxide using a starting material such as ethylene glycol, propylene glycol, bisphenol compounds, glycerol, trimethylolpropane, or pentaerythritol.

Specific examples of the backbone of the polymer according to the present invention include polyethylene oxide, polypropylene oxide, polybutylene oxide, and random or block copolymers of two or more monomers selected from ethylene oxide, propylene oxide, and butylene oxide. In view of flexibility and texture, the repeating unit of the backbone is more preferably oxypropylene.

Any known method, such as one disclosed in WO 2014/073593, may be used to introduce the reactive silyl group into the backbone skeleton of the polymer.

### <Silanol condensation catalyst (B)>

The silanol condensation catalyst (B) according to the present invention is an acidic organophosphate represented by formula (1) disclosed below.

Examples of general silanol condensation catalyst (B) include dialkyltin dicarboxylates such as dibutyltin dilaurate, dibutyltin diacetate, dibutyltin diethylhexanoate, dibutyltin dioctate, dibutyltin dimethylmalate, dibutyltin diethylmalate, dibutyltin dibutylmalate, dibutyltin diisooctylmalate, dibutyltin ditridecylmalate, dibutyltin dibenzylmalate, dibutyltin maleate, dioctyltin diacetate, dioctyltin distearate, dioctyltin dilaurate, dioctyltin diethylmalate, and dioctyltin diisooctylmalate); dialkyltin alkoxides such as dibutyltin dimethoxide and dibutyltin diphenoxide; intramolecular coordination derivatives of dialkyltins, such as dibutyltin diacetylacetonate and dibutyltin diethylacetoacetate; reaction products of dialkyltin oxides (e.g. dibutyltin oxide and dioctyltin oxide) with ester compounds (e.g. dioctyl phthalate, diisodecyl phthalate, and methyl maleate); tin compounds obtained by reaction of dialkyltin oxides, carboxylic acids, and alcohol compounds; reaction products of dialkyltin oxides with silicate compounds, such as dibutyltin bistriethoxysilicate and dioctyltin bistriethoxysilicate; and tetravalent tin compounds such as oxy derivatives of the foregoing dialkyltin compounds (stannoxane compounds); divalent tin compounds such as tin octoate, tin naphthenate, tin stearate, and tin versatate, and reaction products and mixtures thereof with amine compounds such as laurylamine, which will be described later; monoalkyltins such as monobutyltin compounds (e.g. monobutyltin trisoctoate and monobutyltin triisopropoxide) and monooctyltin compounds; titanic acid esters such as tetrabutyl titanate, tetrapropyl titanate, tetra(2-ethylhexyl) titanate, and isopropoxytitanium bis(ethylacetoacetate); organoaluminum compounds such as aluminum trisacetylacetonate, aluminum trisethylacetoacetate, and diisopropoxyaluminum ethylacetoacetate; metal salts of carboxylic acids (e.g. 2-ethylhexanoic acid, neodecanoic acid, versatic acid, oleic acid, and naphthenic acid) such as bismuth carboxylates, iron carboxylates, titanium, carboxylases, lead carboxylates, vanadium carboxylates, zirconium carboxylates, calcium carboxylates, potassium carboxylates, barium carboxylates, manganese carboxylates, cerium carboxylates, nickel carboxylates, cobalt carboxylates, zinc carboxylates, and aluminum carboxylates, and reaction products and mixtures thereof with amine compounds such as laurylamine, which will be described later; chelate compounds such as zirconium tetraacetylacetonate, zirconium tributoxyacetylacetonate, dibutoxyzirconium diacetylacetonate, zirconium acetylacetonate bis(ethylacetoacetate), and titanium tetraacetylacetonate; aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine, and trioctylamine; aliphatic unsaturated amines such as triallylamine and oleylamine; aromatic amines such as laurylaniline, stearylaniline, and triphenylamine; and other amines such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4, 6-tris(dimethylaminomethyl)phenol, morpholine, N-methylmorpholine, 2-ethyl-4-methylimidazole, 1,8-diazabicyclo(5,4,0)undecene-7 (DBU) and other amine compounds, and salts of the foregoing amine compounds with carboxylic acids or other acids; reaction products and mixtures of amine compounds and organotin compounds, such as reaction products and mixtures of laurylamine and tin octoate; low-molecular-weight polyamide resins obtained from an excess of polyamines and polybasic acids; reaction products of an excess of polyamines with epoxy compounds; and other compounds including γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldiethoxysilane, N-(β-aminoethyl)aminopropyltriisopropoxysilane, y-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane. Other silanol condensation catalysts include derivatives obtained by modifying the foregoing compounds, such as amino group-containing silane coupling agents, e.g. amino-modified silyl polymers, silylated amino polymers, unsaturated aminosilane complexes, phenylamino long-chain alkyl silanes, and aminosilylated silicones, as well as known silanol condensation catalysts including fatty acids (e.g. versatic acid) and other acidic catalysts such as acidic organophosphates, and basic catalysts.

These silanol condensation catalysts may be used alone or in combinations of two or more.

Non-limiting examples of acidic organophosphates as acidic catalysts include (CH₃O)₂-P(=O)(-OH), (CH₃O)-P(=O)(-OH)₂, (C₂H₅O)₂-P(=O)(-OH), (C₂H₅O)-P(=O)(-OH)₂, (C₃H₇O)₂-P(=O)(-OH), (C₃H₇O)-P(=O)(-OH)₂, (C₄H₉O)₂-P(=O)(-OH), (C₄H₉O)-P(=O)(-OH)₂, (C₈H₁₇O)₂-P(=O)(-OH), (C₈H₁₇O)-P(=O)(-OH)₂, (C₁₀H₂₁O)₂-P(=O)(-OH), (C₁₀H₂₁O)-P(=O)(-OH)₂, (C₁₃H₂₇O)₂-P(=O)(-OH), (C₁₃H₂₇O)-P(=O)(-OH)₂, (C₁₆H₃₃O)₂-P(=O)(-OH), (C₁₆H₃₃O)-P(=O)(-OH)₂, (HO-C₆H₁₂O)₂-P(=O)(-OH), (HO-C₆H₁₂O)-P(=O)(-OH)₂, (HO-C₈H₁₆O)₂-P(=O)(-OH), (HO-C₈H₁₆O)-P(=O)(-OH)₂, [(CH₂OH)(CHOH)CH₂O]₂-P(=O)(-OH), [(CH₂OH)(CHOH)CH₂O]-P(=O)(-OH)₂, [(CH₂OH)(CHOH)C₂H₄O]₂-P(=O)(-OH), and [(CH₂OH) (CHOH) C₂H₄O]-P(=O)(-OH)₂.

In order to avoid inhibition of the foaming reaction caused by the chemical foaming agent (C) and further avoid inhibition of the curing reaction, i.e., to allow both the foaming and curing reactions to proceed in a balanced manner, the silanol condensation catalyst (B) is an acidic organophosphate having a structure represented by formula (1): (CₘH₂ₘ₊₁O)ₙ-P(=O)(-OH)₃₋ₙ wherein m is an integer of 4 to 10, and n is an integer of 1 or 2. If m is less than 4, the curing reaction tends to proceed slowly, making it difficult to control the balance between the curing and foaming reactions, with the result that the foam tends to remain uncured. In formula (1), n is 1 or 2.

The amount of the silanol condensation catalyst (B) in the foamable liquid resin composition is 0.1 to 5 parts by weight, preferably 0.1 to 3 parts by weight, more preferably 0.1 to 2.5 parts by weight, per 100 parts by weight of the base resin (A) . If the amount of the silanol condensation catalyst (B) is less than 0.1 parts by weight, curing may not sufficiently proceed. If the amount of the silanol condensation catalyst (B) is more than 5 parts by weight, the curing of the liquid resin composition may be difficult to control, or the resulting modified silicone resin foam may be colored.

### <Chemical foaming agent (C) >

In the present invention, the chemical foaming agent (C) is any one selected from combinations of bicarbonates, organic acids, and organic acid salts, combinations of bicarbonates and organic acids, and combinations of bicarbonates and organic acid salts. The chemical foaming agent including any one selected from combinations of bicarbonates, organic acids, and organic acid salts, combinations of bicarbonates and organic acids, and combinations of bicarbonates and organic acid salts is a compound that generates carbon dioxide in parallel with the curing reaction (silanol condensation reaction) of the base resin (A) by the silanol condensation catalyst (B) in the present invention. Since the chemical foaming agent generates no combustible gas such as hydrogen, it is possible to produce the foam without the need of a fire- and explosion-resistant facility.

Any bicarbonate may be used, but sodium hydrogen carbonate or ammonium hydrogen carbonate is preferred because they advantageously decompose in the temperature range in which the curing reaction (silanol condensation reaction) of the base resin (A) by the silanol condensation catalyst (B) properly proceeds.

Polyvalent carboxylic acids are preferred among organic acids. Examples include citric acid, oxalic acid, fumaric acid, phthalic acid, malic acid, and tartaric acid.

Examples of organic acid salts include metal salts (e.g. sodium, potassium, calcium, magnesium, ammonium, aluminium, and zinc) of the organic acids described above.

Each of the bicarbonates, organic acids, and organic acid salts may be used alone or in combinations of two or more.

The amount of the chemical foaming agent (C) in the foamable liquid resin composition is 2 to 40 parts by weight, preferably 5 to 30 parts by weight, per 100 parts by weight of the base resin (A). If the amount of the chemical foaming agent (C) is less than 2 parts by weight, curing may proceed without sufficient foaming, resulting in a foam having poor flexibility and a low expansion ratio. If the amount of the chemical foaming agent (C) is more than 40 parts by weight, foaming may occur to a significant extent as compared to curing, resulting in a defective foam with larger foam cells or other defects.

The amount of the bicarbonate per 100 parts by weight of the base resin (A) is preferably at least 1 part by weight but not more than 36 parts by weight, more preferably at least 2 parts by weight but not more than 25 parts by weight.

The weight ratio of the bicarbonate to the organic acid and/or organic acid salt ((bicarbonate) / (organic acid + organic acid salt), (bicarbonate)/(organic acid), or (bicarbonate) / (organic acid salt)) is preferably at least 1/10 but not more than 10, more preferably at least 1/5 but not more than 5. If the amount of the bicarbonate is less than 1 part by weight or if the weight ratio of the bicarbonate to the organic acid and/or organic acid salt is less than 1/10, the amount of carbon dioxide generated by pyrolysis tends to be small, resulting in a decrease in expansion ratio. If the amount of the bicarbonate is more than 36 parts by weight or if the weight ratio of the bicarbonate to the organic acid and/or organic acid salt is more than 10, the amount of carbon dioxide generated by pyrolysis may be large, resulting in a defective foam with larger foam cells or other defects due to imbalance between foaming and curing.

Examples of other chemical foaming agents include organic pyrolytic foaming agents such as azo compounds, nitroso compounds, hydrazine derivatives, semicarbazide compounds, tetrazole compounds, and trihydrazinotriazine; and inorganic pyrolytic foaming agents such as carbonates and nitrites.

Examples of azo compounds include azodicarbonamide (ADCA), azobisisobutyronitrile (AIBN), barium azodicarboxylate, and diazoaminobenzene.

Examples of nitroso compounds include dinitroso pentamethylene tetramine (DPT).

Examples of hydrazine derivatives include p,p'-oxybis(benzenesulfonylhydrazide) (OBSH), p-toluenesulfonyl hydrazide (TSH), and hydrazodicarbonamide (HDCA) .

Examples of semicarbazide compounds include p-toluenesulfonyl semicarbazide.

Examples of tetrazole compounds include 5-phenyltetrazole, 1H-tetrazole salts, and, 1,4-bistetrazole.

Examples of carbonates include sodium carbonate and ammonium carbonate.

Examples of nitrites include ammonium nitrite.

These chemical foaming agents may be used alone or in combinations of two or more.

The chemical foaming agent (C) according to the present invention may be a thermally expandable microcapsule. The thermally expandable microcapsule contains in a thermoplastic shell polymer a volatile liquid that converts Lo gas at a temperature equal to or lower than the softening point of the shell polymer. When the thermally expandable microcapsule is heated, the volatile liquid converts to gas while the shell polymer softens and expands.

### <Other additives>

In the present invention, a plasticizer may be added in order to control the flexibility and forming processability of the modified silicone resin foam.

For example, the addition of a plasticizer can prevent deterioration of the flexibility and texture inherent to modified silicone resin foams, which would otherwise occur due to an increase in hardness resulting from a crosslinking reaction (post-crosslinking) caused by unreacted silyl groups present in the modified silicone resin foam during aging of the foam.

The plasticizer to be used is preferably one having a backbone composed of oxyalkylene repeating units. Examples include polyether polyols and their derivatives in which hydroxy groups of polyether polyols are converted to ester, ethyl, or other groups. Specific examples of the backbone include polyethylene oxide, polypropylene oxide, polybutylene oxide, and random or block copolymers of two or more monomers selected from ethylene oxide, propylene oxide, and butylene oxide. These plasticizers may be used alone or in combinations of two or more. Among these, polypropylene oxide is preferred in view of compatibility with the base resin (A). The plasticizer may be either linear or branched as long as it can impart flexibility to the modified silicone resin foam.

As for the molecular weight of the plasticizer, the number average molecular weight is preferably 1000 or more, more preferably 3000 or more, in view of the flexibility of the resulting modified silicone resin foam and in order to prevent bleeding out of the plasticizer from the system. If the number average molecular weight is less than 1000, the plasticizer may bleed out from the system with time due to e.g. heat or compression, which not only makes it impossible to maintain the initial physical properties for a long term but may also adversely affect texture. The upper limit is not particularly limited, but the number average molecular weight is preferably 50000 or less, more preferably 30000 or less. If the number average molecular weight is more than 50000, workability may deteriorate due to increase in viscosity.

The amount of the plasticizer per 100 parts by weight of the base resin (A) is preferably at least 5 parts by weight but not more than 150 parts by weight, more preferably at least 10 parts by weight but not more than 120 parts by weight, still more preferably at least 20 parts by weight but not more than 100 parts by weight. If the amount is less than 5 parts by weight, the effects of controlling flexibility and forming processability may be difficult to obtain. If the amount is more than 150 parts by weight, the modified silicone resin foam tends to have insufficient mechanical strength or reduced expansion ratio.

Any known method may be used to prepare the plasticizer, and commercially available compounds may also be used.

Additives such as a light-resistant stabilizer, an ultraviolet absorber, a storage stabilizer, a foam regulator, and a lubricant may be added, if necessary, to the modified silicone resin foam of the present invention as long as the effects of the present invention are not impaired.

Examples of the light-resistant stabilizer include hindered phenol antioxidants and hindered amine light stabilizers free of sulfur and phosphorus atoms and primary and secondary amines. The term "light-resistant stabilizer" as used herein refers a compound having a function to absorb light having a wavelength in the ultraviolet range to inhibit generation of radicals, a function to capture radicals generated by absorption of light and convert the radicals into thermal energy to detoxify them, or the like function, thus increasing stability to light.

The ultraviolet absorber is not particularly limited, and examples include benzoxazine ultraviolet absorbers, benzophenone ultraviolet, absorbers, benzotriazole ultraviolet absorbers, and triazine ultraviolet absorbers. The term "ultraviolet absorber" as used herein refers to a compound having a function to absorb light having a wavelength in the ultraviolet range to inhibit generation of radicals.

The amounts of the light-resistant stabilizer and the ultraviolet absorber in the present invention are each preferably at least 0.01 parts by weight but not more than 5 parts by weight, more preferably at least 0.1 parts by weight but not more than 3 parts by weight, still more preferably at least 0.3 parts by weight but not more than 2.0 parts by weight, per 100 parts by weight of the base resin (A) in order to easily provide the effect of reducing the increase in surface tackiness with time.

Preferred examples of the storage stability improving agent include compounds containing aliphatic unsaturated bonds, organophosphorus compounds, organosulfur compounds, nitrogen-containing compounds, tin compounds, and organic peroxides, which may be used alone or in combinations of two or more. Specific examples include 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morphodinyldithio)benzothiazole, 3-methyl-1-buten-3-ol, acetylenic unsaturated group-containing organosiloxanes, acetylene alcohol, 3-methyl-1-butyn-3-ol, 2-methyl-3-butyn-2-ol, diallyl fumarate, diallyl maleate, diethyl fumarate, diethyl maleate, dimethyl maleate, 2-pentenenitrile, and 2,3-dichloropropene.

The foam regulator may be of any type, and commonly used foam regulators may be used, including inorganic solid powders such as talc, calcium carbonate, magnesium oxide, titanium oxide, zinc oxide, carbon black, and silica; silicone oil compounds such as polyether modified silicone oils; and fluorine compounds. These foam regulators may be used alone or in combinations of two or more.

The amount of the foam regulator in the present invention is preferably at least 0.1 parts by weight but not more than 100 parts by weight, more preferably at least 0.5 parts by weight but not more than 50 parts by weight, per 100 parts by weight of the combined amount of the base resin (A) and the silanol condensation catalyst (B).

The use of a lubricant can improve the compatibility of the foamable liquid resin composition containing the base resin (A), the silanol condensation catalyst (B), and the chemical foaming agent (C). With the use of a lubricant, it is also possible to reduce friction and adhesion within the foam cells of a foam produced by foaming the foamable liquid resin composition, so as to allow the foam to have a desired texture and flexibility. In addition, the lubricant tends to be retained in a three-dimensional network structure formed by a silanol condensation reaction between molecules of the base resin (A) and less likely to bleed out from the foam system. Therefore, the foam can maintain the texture and flexibility for a long period of time.

The lubricant is preferably a liquid lubricant. Specific examples of the liquid lubricant include paraffinic mineral oils, naphthenic mineral oils, animal or vegetable oils such as fatty acid glycerides, olefinic lubricants having an alkyl structure such as poly-1-decene and polybutene, alkyl aromatic lubricants having an aralkyl structure, polyalkylene glycol lubricants, ether lubricants such as polyalkylene glycol ethers, perfluoropolyethers, and polyphenyl ethers, ester lubricants having an ester structure such as aliphatic acid esters, aliphatic acid diesters, polyol esters, silicic acid esters, and phosphoric acid esters, silicone lubricants such as dimethyl silicone (i.e. dimethyl polysiloxane capped with a trimethylsiloxy group at both ends) and silicone oils in which the methyl groups of dimethyl silicone are partially replaced with a polyether, phenyl, alkyl, aralkyl, fluorinated alkyl, or other groups, and fluorine atom-containing lubricants such as chlorofluorocarbon. These lubricants may be used alone or in combinations of two or more.

In the present invention, silicone lubricants are particularly preferred among these in view of decrease in frictional coefficient within foam cells and of dispersibility, processability, safety, and other standpoints.

The amount of the lubricant per 100 parts by weight of the base resin (A) is preferably 1 part by weight or more, more preferably 2 parts by weight or more, still more preferably 3 parts by weight or more. If the amount is less than 1 part by weight, the lubricant cannot sufficiently reduce friction or adhesion within foam cells, thus failing to allow for a desired texture or flexibility. The upper limit of the amount of the lubricant is not particularly limited, but the amount is preferably 25 parts by weight or less, more preferably 20 parts by weight or less. If the amount is more than 25 parts by weight, the resulting foam tends to have a reduced expansion ratio or the lubricant tends to bleed out from the system.

### <Modified silicone resin foam>

The modified silicone resin foam of the present invention has an ASKER FP hardness of 60 or less in a 25°C atmosphere. The ASKER FP hardness can be determined with an ASKER FP hardness tester. The ASKER FP hardness is preferably 50 or less, more preferably 40 or less. An ASKER FP hardness of 60 or less is considered to indicate a flexible texture.

The modified silicone resin foam of the present invention preferably has a density of 900 kg/m³ or less, more preferably 500 kg/m³ or less. When the foam having a density of 900 kg/m³ or less is prepared as a product such as bedclothes or cushions, for example, the product is expected to be relatively light and easy to carry in daily life. The lower limit of the density of the foam is not particularly limited, but the density is preferably 10 kg/m³ or more, more preferably 70 kg/m³ or more. If the foam having a density of less than 10 kg/m³ is used for bedclothes, cushions or the like, the foam product may bottom out due to compression.

The modified silicone resin foam of the present invention may be in any form. For example, it may be formed as a plate, sheet, indeterminate lump, bead, bag, garment or other forms.

The foam may be used alone or may be integrated with different foams such as polyurethane foams, gels, plastics, rubbers, films, fibrous products such as cloth and nonwoven fabrics, paper, or other materials.

Moreover, cloth or nonwoven fabric made of cotton, acrylic fibers, wool, polyester fibers, or other materials may be bonded to the surface of the modified silicone resin foam of the present invention, appropriately using an adhesive. Such bonding can further improve the texture of the foam and can also, depending on the application, provide a sweat absorption effect via the bonded cloth during exercise or perspiration in hot and humid conditions.

The shape of the modified silicone resin foam of the present invention is not particularly limited. Examples include polygons such as rectangle, square, circle, ellipse, and rhombus shapes; a strip shape; a donut shape with a hollow interior; and shapes with rough surfaces.

Moreover, through-holes may appropriately be formed for permeability.

Any method may be used to produce the modified silicone resin foam. The foamable liquid resin composition may be injected into a mold before foaming and curing. Alternatively, the foamable liquid resin composition may be foamed before or simultaneously with curing.

Specifically, the modified silicone resin foam can be produced as described below.

Any method may be used to produce the foamable liquid resin composition. The base resin (A), the silanol condensation catalyst (B), and the chemical foaming agent (C), and other optional additives are mixed by stirring to produce the foamable liquid resin composition. The mixing of the components may be carried out in any order. The components may be mixed together, but preferably the base resin (A) and the chemical foaming agent (C), and other optional additives are mixed in advance before the silanol condensation catalyst (B) is finally added to the mixture. When a plurality of base resins (A) are used in combination, they may be added simultaneously.

In the case of foaming before curing, for example, pre-expanded thermally expandable microcapsules, the base resin (A), and other optional additives may be mixed before the silanol condensation catalyst (B) is finally added to the mixture. When a plurality of base resins (A) are used in combination, they may be added simultaneously.

Subsequently, the foamable liquid resin composition is, for example, injected into a mold or dropped onto a substrate placed on a conveyor belt, followed by heating to cause curing and foaming, whereby the modified silicone resin foam of the present invention is produced.

The heating temperature and the heating time are not particularly limited, but the modified silicone resin foam of the present invention may be produced by heating, for example, at a temperature of at least 25°C but not more than 250°C, for example, for a period of time of at least 1 minute but not more than 6 hours, preferably at least 10 minutes but not more than 3 hours.

The modified silicone resin foam of the present invention has high flexibility and good texture and thus can be used in various applications in which these physical properties can be effectively achieved. Moreover, the modified silicone resin foam, which is free of isocyanates, can be suitably used, for example, as an acoustic insulation material, a damping material, or a cushion material in applications such as transportation equipment, bedclothes and bedding, house furnishings, various types of equipment, building materials, packaging materials, and medical and nursing care.

The modified silicone resin foam of the present invention can effectively achieve its excellent texture and flexibility in applications, including transportation equipment applications such as: cushion materials, skin materials, and skin backing materials for seats, child seats, head rests, arm rests, foot rests, and headliners for automobiles, construction machinery, railroad vehicles, ships, aircraft or the like, saddles and rider cushions for bikes, bicycles or the like, bed mats for customized vehicles, cushions for camping vehicles, etc.; ceiling materials; core materials, skin materials, and skin backing materials for handles, door trims, instrument panels, dashboards, door panels, pillars, console boxes, quarter trims, sun visors, flexible containers, front mirrors, harnesses, dust covers, etc.; damping and sound absorbing materials for floor cushions, etc.; cushioning materials for helmet linings, crash pads, center pillar garnish, etc.; energy absorbing bumpers; guard acoustic insulation materials; and sponges for vehicle waxing.

Examples of bedclothes and bedding applications include cushion materials, skin materials, and skin backing materials for pillows, comforters, Japanese mattresses, beds, mattresses, bed mats, bed pads, cushions, baby beds, neck pillows for babies, etc.

Examples of home furnishing applications include cushion materials, skin materials, and skin backing materials for various cushions for chairs, legless chairs, floor cushions, sofas, sofa cushions, seat cushions, etc., carpets and mats, kotatsu carpets and comforters, toilet seat mats, etc.

Examples of various equipment applications include sealing and cushioning materials for liquid crystals, electronic parts, etc., robot skins, electrically conductive cushion materials, antistatic cushion materials, and pressure sensing materials.

Examples of building material applications include heat insulating materials for floors, roofs, etc., and shock absorbing materials for floors, walls, etc.

Examples of packaging material applications include packing materials such as cushioning materials, cushion materials, and shock absorbing materials.

Examples of medical and nursing care applications in which the modified silicone resin foam can also be used include cell sheets for regenerative medicine, artificial skins, artificial bones, artificial cartilages, artificial organs and other biocompatible materials, liquid medecine exuding pads, hemostatic pads, gas-liquid separation filters (filters for indwelling needles), patches, medical liquid absorbing tools, masks, compression pads, surgical disposable products, electrode pads for low frequency therapy equipment, mattresses for preventing bed sores, cushions for postural change, cushions for wheelchairs, seating faces of wheelchairs, nursing care products such as shower chairs, bath support pillows, palm protectors for contracture, taping, liners for plaster casts, liners for artificial limb prosthesis and prosthetic legs, denture pads and other dental products, shock absorbing pads, hip protectors, protectors for elbows and knees, and wound dressings.

Other applications may include the following:
various types of washing sponges, such as cleaners for cleaning, cleaners for dish washing, cleaners for body washing, shoe polish cleaners, and cleaners for car washing;
toiletries, such as absorbent materials, side gathers, and various liquid filters for diapers, sanitary napkins, etc.;
footwear, such as shoe skin materials, backings, and insoles, shoe sore preventing pads, various shoe pads, inner boots, slippers, slipper cores, sandals, and sandal insoles;
cosmetic tools, such as puffs for cosmetic use and eye shadow applicator tips;
miscellaneous goods, such as core materials, cushion materials, skin materials, and skin backing materials for bath products such as bath pillows, massage puffs, mouse pads, arm rests for keyboards, anti-slip cushions, stationery products (pen grips, self-inking stamps), small pillows for use on the desk, earplugs, cotton swabs, sheets for hot packs, sheets for cold packs, poultices, eyeglass pads, pads for swimming goggles, face protectors, pads for wrist watches, ear pads for headphones, earphones, ice pillow covers, foldable pillows, etc., base materials for double-faced tapes, and adsorption media for fragrances, ink pads, etc.;
clothing materials, such as pad materials for shoulders, brassieres, etc., and liners and heat insulating materials such as cold protection materials;
sports, such as cushion materials, skin materials, and skin backing materials for protectors for sports, mats for bouldering (climbing rocks with a height of 2 to 3 m, mini rock climbing), kickboards, cushion materials for high jump, landing mats for gymnastics and exercise, mats for kids, etc., and liners for ski boots, snow board boots, etc.; and
toys and playground equipment, such as cushion materials, stuffing, skin materials, and skin backing materials for hand exercisers, healing goods, key holders, stuffed toys, mannequin bodies, balls, massage balls, etc., casting materials for molding of specially shaped products such as ornaments or monster figures, or various articles, and for producing models, materials for molding of articles by casting methods, materials for producing model samples using molds, materials for producing ornaments, and special forming and formed products of monster figures.

### EXAMPLES

The present invention is described in more detail below with reference to examples, but the present invention is not limited to these examples.

The following measurement or evaluation conditions and methods were used in the examples and comparative examples.

### <Flexibility>

In a 25°C atmosphere, an ASKER FP hardness tester (Kobunshi Keiki Co., Ltd.) was placed on a flat bottom portion of the prepared modified silicone resin foam, and flexibility was evaluated based on its readings. Since the readings of some samples may decrease with time, the values immediately after the placement of the hardness tester were read.

### <Texture>

The texture obtained when the prepared modified silicone resin foam was compressed by a palm was evaluated according to the following criteria.
Good: The foam is soft and comfortable to touch. Moreover, when the foam is pressed until bottoming out is felt with the finger and then the finger is transversely slid, transverse deformation can be caused by low force. The texture is similar to that of gel materials.
Average: When the foam is pressed until bottoming out is felt with the finger and then the finger is transversely slid, transverse deformation can be caused only by great force. Poor: When the foam is pressed until bottoming out is felt with the finger and then the finger is transversely slid, transverse deformation cannot be caused even by great force.

### <Density of foam>

An approximately 30 mm square cube was cut out from the prepared modified silicone resin foam, and the three dimensions of the cube were measured to calculate the volume (m³). Then, the measured weight (kg) of the cube was divided by the volume to calculate the density (kg/m³).

### <Raw materials>

The following raw materials were used in the examples and comparative examples.

### [Base resin (A)]

Base resin 1: trimethoxysilyl group-terminated polypropylene oxide polymer, number average molecular weight: 29000, 1.4 reactive silyl groups per molecule
Base resin 2: trimethoxysilyl group-terminated polypropylene oxide polymer, number average molecular weight: 29000, 1.7 reactive silyl groups per molecule
Base resin 3: methyldimethoxysilyl group-terminated polypropylene oxide polymer, number average molecular weight: 29000, 1.8 reactive silyl groups per molecule
Base resin 4: methyldimethoxysilyl group-terminated polypropylene oxide polymer, number average molecular weight: 8000, 0.9 reactive silyl groups per molecule

### [Silanol condensation catalyst (B)]

AP-1 (trade name): methyl acid phosphate, Daihachi Chemical Industry Co., Ltd.
AP-4 (trade name): butyl acid phosphate, Daihachi Chemical Industry Co., Ltd.
AP-8 (trade name): 2-ethylhexyl acid phosphate, Daihachi Chemical Industry Co., Ltd.
AP-10 (trade name) : isodecyl acid phosphate, Daihachi Chemical Industry Co., Ltd.
VT: tin neodecanoate, U-50 (trade name), Nitto Kasei Co., Ltd.
OT: tin octoate, U-28 (trade name), Nitto Kasei Co., Ltd.
VA: neodecanoic acid, Versatic 10 (trade name), Japan Epoxy Resins Co. Ltd.
2-EHA: 2-ethylhexanoic acid
LA: laurylamine

### [Chemical foaming agent (C)]

Sodium hydrogen carbonate: FE-507 (trade name), Eiwa Chemical Ind. Co., Ltd.
Citric acid: citric acid (anhydride) (trade name), Iwata Chemical Co., Ltd.

### [Plasticizer]

Polyether polyol: SHP-3900 (trade name), Mitsui Chemicals, Inc.

### [Lubricant]

Dimethylpolysiloxane: KF-96-100cs (trade name), Shin-Etsu Chemical Co., Ltd.

### (Example 1)

A chemical foaming agent (C) was added to a base resin (A), followed by sufficient mixing. Subsequently, a silanol condensation catalist (B) was added to the, mixture, followed by sufficient mixing. The resulting mixture was injected into a mold and then thermally cured in a 100°C oven for 90 minutes. Thus, a modified silicone resin foam was produced.

### (Example 2)

A chemical foaming agent (C) was added to a base resin (A), followed by sufficient mixing. Subsequently, a plasticizer was mixed into the mixture, and a silanol condensation catalyst (B) was finally added thereto, followed by sufficient mixing. The resulting mixture was injected into a mold and then thermally cured in a 100°C oven for 90 minutes. Thus, a modified silicone resin foam was produced.

### (Examples 3 and 4)

A chemical foaming agent (C) was added to a base resin (A), followed by sufficient mixing. Subsequently, a plasticizer and a lubricant were mixed into the mixture, and a silanol condensation catalyst (B) was finally added thereto, followed by sufficient mixing. The resulting mixture was injected into a mold and then thermally cured in a 100°C oven for 90 minutes. Thus, a modified silicone resin foam was produced.

### (Examples 5 to 9)

A chemical foaming agent (C) was added to a base resin (A), followed by sufficient mixing. Subsequently, a lubricant was mixed into the mixture, and a silanol condensation catalyst (B) was finally added thereto, followed by sufficient mixing. The resulting mixture was injected into a mold and then thermally cured in a 100°C oven for 90 minutes. Thus, a modified silicone resin foam was produced.

### (Examples 10 and 11)

A chemical foaming agent (C) was added to a base resin (A), followed by sufficient mixing. Subsequently, a plasticizer and a lubricant were mixed into the mixture, and a silanol condensation catalyst (B) was finally added thereto, followed by sufficient mixing. The resulting mixture was injected into a mold and then thermally cured in a 100°C oven for 90 minutes. Thus, a modified silicone resin foam was produced.

### (Examples 12 and 13)

A chemical foaming agent (C) was added to a base resin (A), followed by sufficient mixing. Subsequently, a lubricant was mixed into the mixture, and a silanol condensation catalyst (B) was finally added thereto, followed by sufficient mixing. The resulting mixture was injected into a mold and then thermally cured in a 100°C oven for 90 minutes. Thus, a modified silicone resin foam was produced.

### (Comparative Example 1)

First, hollow particles were produced by the following method as described in Synthesis Example 1 and Production Example 1 of Patent Literature 2 (JP-A 2013-237815).

An amount of 120 g of sodium chloride, 100 g of colloidal silica containing 20% by weight of silica as an active ingredient, 1.0 g of polyvinylpyrrolidone, and 1.0 g of a 5% aqueous solution of carboxymethylated polyethyleneimine, Na salt were added to 600 g of ion-exchanged water, and then the pH of the mixture was adjusted to 2.8 to 3.2 to prepare an aqueous dispersion medium. Separately, 130 g of acrylonitrile, 106 g of methacrylonitrile, and 3 g of methyl methacrylate (all are monomer components), 1.0 g of ethylene glycol dimethacrylate (a crosslinking agent), 50 g of isopentane (a foaming agent, boiling point: 27.7°C), and 1.5 g of azobisisobutyronitrile (a polymerization initiator) were mixed to prepare an oily mixture. The aqueous dispersion medium and the oily mixture were mixed, and the mixture was dispersed for two minutes using a homomixer (TK-homomixer avaible from Tokushu kika Kogyo Co. Ltd., rotation speed: 12000 rpm) to prepare a suspension. The suspension was transferred to a 1.5 L pressure reactor and purged with nitrogen. Then, the initial reaction pressure was set to 0. 5 MPa, and the suspension was polymerized with stirring at 80 rpm at a polymerization temperature of 70°C for 20 hours. After the polymerization, the polymerization solution was filtered and dried to obtain thermally expandable microcapsules. The thermally expandable microcapsules were expanded to produce hollow particles having a true specific gravity of 0.064 and an average particle size of 39 µm.

An amount of 100 parts by weight of a methyldimethoxysilyl group-terminated polypropylene oxide polymer (trade name Kaneka MS Polymer S203 available from Kaneka Corporation) was mixed with 60 parts by weight of a phthalate plasticizer (trade name DINP available from J-Plus Co. Ltd.), 120 parts by weight of surface-treated colloidal calcium carbonate (trade name Hakuenka CCR available from Shiraishi Kogyo Kaisha, Ltd.), and 2 parts by weight of an anti-sagging agent (trade name Disparlon 6500 available from Kusumoto Chemicals, Ltd.), followed by sufficient kneading. Then, the mixture was dispersed by passing three times through a three-roll paint mill. Subsequently, the mixture was stirred in a mixer under reduced pressure for two hours while heating at 120°C to remove the moisture in the composition. The moisture content was confirmed to be 500 ppm or less. Subsequently, the composition was cooled to 50°C or lower, and thereto were added 3.63 parts by weight of the hollow particles described above, 2 parts by weight of vinyltrimethoxysilane (trade name Silquest A-171 available from Momentive Performance Materials) as a dehydrating agent, 3 parts by weight of γ-(2-aminoethyl)aminopropyltrimethoxysilane (trade name Silquest A-1120 available from Momentive Performance Materials) as an adhesion-imparting agent, and 1 part by weight of dibutytinbisactylacetonate (trade name Neostann U-220H available from Nitto Kasei Co., Ltd.) as a curing catalyst, followed by kneading to obtain a curable composition.

The curable composition was loaded into a 330 mL hermetic container and allowed to stand for curing.

### (Comparative Example 2)

A silanol condensation catalyst (B) was added to a base resin (A), followed by sufficient mixing. The mixture was injected into a mold and then thermally cured in a 100°C oven for 90 minutes.

### (Comparative Example 3)

A chemical foaming agent (C) was added to a base resin (A), followed by sufficient mixing. Subsequently, a silanol condensation catalyst (B) was added to the mixture, followed by sufficient mixing. During the mixing, the mixture started curing and was turned into a cured product before heating in an oven.

### (Comparative Examples 4 to 7)

A chemical foaming agent (C) was added to a base resin (A), followed by sufficient mixing. Subsequently, a silanol condensation catalyst (B) obtained by previously mixing components at a weight ratio as shown in Table 1 was added to the mixture, followed by sufficient mixing. The resulting mixture was injected into a mold and put in a 100°C oven for 120 minutes in an attempt to thermally cure the mixture, but no curing occurred.

### (Comparative Example 8)

A chemical foaming agent (C) was added to a base resin (A), followed by sufficient mixing. Subsequently, a silanol condensation catalyst (B) was added to the mixture, followed by sufficient mixing. The resulting mixture was injected into a mold and put in a 100°C oven for 120 minutes in an attempt to thermally cure the mixture, but no curing occurred.

Tables 1 and 2 show the raw materials, the amounts thereof in parts by weight, and the evaluation results in the examples and comparative examples.

**[Table 1]**

| | | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| Base resin (A) | | resin 1 | parts by weight | 100 | - | 100 | - | - | 80 | 70 | 80 | 80 | 80 | - | 80 | 80 |
| | | Base resin 2 | parts by weight | - | 100 | - | - | 80 | - | - | - | - | - | - | - | - |
| | | Base resin 3 | parts by weight | - | - | - | 100 | - | - | - | - | -- | - | 90 | - | - |
| | | Base resin 4 | parts by weight | - | - | - | - | 20 | 20 | 30 | 20 | 20 | 20 | 10 | 20 | 20 |
| Silanol condensation catalyst (B) | | AP-4 | parts by weight | - | - | - | - | - | - | - | - | - | - | - | 0.5 | - |
| | | AP-8 | weight by weight | 0.25 | 0.25 | 0.25 | 0.4 | 0.5 | 0.5 | 0.5 | 0.5 | 0.5 | 0.5 | 0.5 | - | - |
| | | AP-10 | parts by weight | - | - | - | - | - | - | - | - | - | - | - | - | 0.5 |
| Chemical foaming agent (C) | | Sodium hydrogen carbonate | parts by weight | 5 | 5 | 5 | 5 | 5 | 5 | 5 | 9 | 3 | 7.5 | 7.5 | 5 | 5 |
| | | Citric acid | parts by weight | 5 | 5 | 5 | 5 | 5 | 5 | 5 | 3 | 9 | 7.5 | 7.5 | 5 | 5 |
| Other additives | | Plasticizer | parts weight by | - | 30 | 30 | 30 | - | - | - | - | - | 10 | 30 | - | - |
| | | Lubricant | parts by weight | - | - | 5 | 5 | 5 | 5 | 5 | 5 | 5 | 5 | 5 | 5 | 5 |
| Results | ASKER FP hardness | | - | 28 | 38 | 0 | 13 | 40 | 0 | 0 | 0 | 12 | 0 | 0 | 0 | 0 |
| | Texture | | - | Good | Average | Good | Good | Average | Good | Good | Good | Good | Good | Good | Good | Good |
| | Density | | kg/m³ | 329 | 414 | 282 | 288 | 391 | 306 | 298 | 243 | 339 | 287 | 250 | 301 | 268 |

**[Table 2]**

| | | | | Comparative Example 1 | Comparative Example 2 | Comparative Example 3 | Comparative Example 4 | Comparative Example 5 | Comparative Example 8 | Comparative Example 7 | Comparative Example 8 |
|---|---|---|---|---|---|---|---|---|---|---|---|
| Base resin (A) | | Base resin 1 | parts weight by | | 100 | 100 | 80 | 80 | 80 | 80 | 80 |
| | | Base resin 2 | parts by weight | | - | - | - | - | - | - | - |
| | | Base resin 3 | parts by weight | | - | - | - | - | - | - | - |
| | | Base resin 4 | parts by weight | | - | - | 20 | 20 | 20 | 20 | 20 |
| Silanol condensation catalyst (B) | | VT/LA | parts by weight | | - | - | 3/0.5 | - | - | - | - |
| | | OT/LA | weight by weight | | - | - | - | 3/0.5 | - | - | - |
| | | VA/LA | parts by weight | | - | - | - | - | 3/0.5 | - | - |
| | | 2-EHA/LA | parts by weight | | - | - | - | - | - | 3/0.5 | - |
| | | AP-1 | weight by weight | | - | - | - | - | - | - | 0.5 |
| | | AP-8 | weight by weight | | 0.25 | 10 | - | - | - | - | - |
| Chemical foaming agent (C) | | Sodium hydrogen carbonate | parts by weight | | - | 5 | 5 | 5 | 5 | 5 | 5 |
| | | Citric acid | parts by weight | | - | 5 | 5 | 5 | 5 | 5 | 5 |
| Other additives | | Plasticizer | parts by weight | | - | - | - | - | - | - | - |
| | | Lubricant | parts by weight | | - | - | - | - | - | - | - |
| Results | ASKER FP hardness | | - | >100 | >100 | Cured during mixing | Uncured | Uncured | Uncured | Uncured | Uncured |
| | Texture | | - | Poor | Poor | | | | | | |
| | Density | | kg/m³ | - | - | | | | | | |

The above results show that the foams of the examples had higher flexibility and better texture than the foams of the comparative examples. Thus, it was demonstrated that the present invention can provide a modified silicone resin foam having excellent flexibility and good texture without emitting explosive hydrogen gas.

## Claims

1. A modified silicone resin foam, obtained by curing a foamable liquid resin composition, the foamable liquid resin composition comprising:
100 parts by weight of a base resin (A);
0.1 to 5 parts by weight of a silanol condensation catalyst (B); and
2 to 40 parts by weight of a chemical foaming agent (C), wherein
the base resin (A) comprises a polymer having in its molecular chain at least one silyl group that contains a hydrolyzable group bonded to a silicon atom and can be crosslinked by forming a siloxane bond, the polymer having a backbone composed of oxyalkylene units,
the silanol condensation catalyst (B) is an acidic organophosphate represented by formula (1): (CₘH₂ₘ₊₁O)ₙ-P(=O)(-OH)₃₋ₙ wherein m is an integer of 4 to 10, and n is 1 or 2,
the chemical foaming agent (C) is any one selected from combinations of bicarbonates, organic acids, and organic acid salts, combinations of bicarbonates and organic acids, and combinations of bicarbonates and organic acid salts, and
the foam has an ASKER FP hardness of 60 or less in a 25°C atmosphere.

2. The modified silicone resin foam according to claim 1,
wherein the backbone of the polymer is composed of oxypropylene repeating units.

3. The modified silicone resin foam according to claim 1 or 2,
wherein the polymer has a number average molecular weight of at least 3000 but not more than 100000, as calculated by GPC calibrated with polystyrene standards.

4. The modified silicone resin foam according to any one of claims 1 to 3,
wherein the organic acids are polyvalent carboxylic acids.

5. The modified silicone resin foam according to any one of claims 1 to 4,
wherein the organic acid salts are metal salts of polyvalent carboxylic acids.

6. The modified silicone resin foam according to any one of claims 1 to 5,
wherein the foam has a density of at least 10 kg/m³ but not more than 900 kg/m³.

7. A method for producing the modified silicone resin foam defined in any one of claims 1 to 6,
wherein the method comprises injecting the foamable liquid resin composition into a mold, followed by foaming and curing.

8. The method for producing the modified silicone resin foam according to claim 7,
wherein the method comprises foaming the foamable liquid resin composition before or simultaneously with curing.

## Patentansprüche

1. Ein modifizierter Silikonharzschaumstoff, erhalten durch Härten einer schäumbaren Flüssigharzzusammensetzung, wobei die schäumbare Flüssigharzzusammensetzung umfasst:
100 Gewichtsteile eines Grundharzes (A);
0,1 bis 5 Gewichtsteile eines Silanolkondensationskatalysators (B); und
2 bis 40 Gewichtsteile eines chemischen Schaumbildners (C), wobei
das Grundharz (A) ein Polymer umfasst, welches in seiner Molekülkette mindestens eine Silylgruppe aufweist, die eine an ein Siliziumatom gebundene hydrolisierbare Gruppe enthält und durch Bilden einer Siloxanbindung vernetzt werden kann, wobei das Polymer ein Gerüst aufweist, welches aus Oxyalkyleneinheiten besteht,
der Silanolkondensationskatalysator (B) ein saures Organophosphat ist, dargestellt durch Formel (1): (CₘH₂ₘ₊₁O)ₙ-P(=O)(-OH)₃₋ₙ, wobei m eine ganze Zahl von 4 bis 10 ist und n für 1 oder 2 steht,
der chemische Schaumbildner (C) ein beliebiger, ausgewählt aus Kombinationen von Bicarbonaten, organischen Säuren und organischen Säuresalzen, Kombinationen aus Bicarbonaten und organischen Säuren und Kombinationen aus Bicarbonaten und organischen Säuresalzen, ist, und
der Schaum eine ASKER FP-Härte von 60 oder weniger in einer Atmosphäre von 25°C aufweist.

2. Der modifizierte Silikonharzschaumstoff gemäß Anspruch 1,
wobei das Gerüst des Polymers aus Oxypropylen-Wiederholungseinheiten besteht.

3. Der modifizierte Silikonharzschaumstoff gemäß Anspruch 1 oder 2,
wobei das Polymer ein zahlengemitteltes Molekulargewicht von mindestens 3000 aber nicht mehr als 100000 aufweist, berechnet durch GPC, kalibriert mit Polystyrolstandards.

4. Der modifizierte Silikonharzschaumstoff gemäß einem der Ansprüche 1 bis 3,
wobei die organischen Säuren mehrwertige Carboxylsäuren sind.

5. Der modifizierte Silikonharzschaumstoff gemäß einem der Ansprüche 1 bis 4,
wobei die organischen Säuresalze Metallsalze von mehrwertigen Carbonsäuren sind.

6. Der modifizierte Silikonharzschaumstoff gemäß einem der Ansprüche 1 bis 5,
wobei der Schaumstoff eine Dichte von mindestens 10 kg/m³ aber nicht mehr als 900 kg/m³ aufweist.

7. Ein Verfahren zur Herstellung des modifizierten Silikonharzschaumstoffes wie in einem der Ansprüche 1 bis 6 definiert,
wobei das Verfahren das Injizieren der schäumbaren Flüssigharzzusammensetzung in eine Form umfasst, gefolgt von Schäumen und Härten.

8. Das Verfahren zur Herstellung des modifizierten Silikonharzschaumstoffes gemäß Anspruch 7,
wobei das Verfahren das Schäumen der schäumbaren Flüssigharzzusammensetzung vor oder gleichzeitig mit dem Härten umfasst.

## Revendications

1. Mousse de résine silicone modifiée, obtenue par durcissement d'une composition de résine liquide expansible, la composition de résine liquide expansible comprenant :
100 parties en poids d'une résine de base (A) ;
0,1 à 5 parties en poids d'un catalyseur de condensation au silanol (B) ; et
2 à 40 parties en poids d'un agent d'expansion chimique (C), dans laquelle
la résine de base (A) comprend un polymère ayant dans sa chaîne moléculaire au moins un groupe silyle qui contient un groupe hydrolysable lié à un atome de silicium et pouvant être réticulé par formation d'une liaison siloxane, le polymère ayant un squelette composé de motifs oxyalkylène,
le catalyseur de condensation au silanol (B) est un organophosphate acide représenté par la formule (1) : (CₘH₂ₘ₊₁O)ₙ-P(=O)(-OH)₃₋ₙ dans laquelle m est un nombre entier de 4 à 10, et n est 1 ou 2,
l'agent d'expansion chimique (C) est un agent quelconque choisi parmi des combinaisons de bicarbonates, d'acides organiques, et de sels d'acides organiques, des combinaisons de bicarbonates et d'acides organiques, et des combinaisons de bicarbonates et de sels d'acides organiques, et
la mousse a une dureté ASKER FP de 60 ou moins dans une atmosphère de 25 °C.

2. Mousse de résine silicone modifiée selon la revendication 1,
dans laquelle le squelette du polymère est composé de motifs de répétition d' oxypropylène.

3. Mousse de résine silicone modifiée selon la revendication 1 ou 2,
dans laquelle le polymère a un poids moléculaire moyen en nombre d'au moins 3000 mais inférieur ou égal à 100 000, calculé par une GPC étalonnée à l'aide d'étalons de polystyrène.

4. Mousse de résine silicone modifiée selon l'une quelconque des revendications 1 à 3,
dans laquelle les acides organiques sont des acides carboxyliques polyvalents.

5. Mousse de résine silicone modifiée selon l'une quelconque des revendications 1 à 4,
dans laquelle les sels d'acides organiques sont des sels métalliques d'acides carboxyliques polyvalents.

6. Mousse de résine silicone modifiée selon l'une quelconque des revendications 1 à 5,
dans laquelle la mousse a une densité d'au moins 10 kg/m³ mais pas de plus de 900 kg/m³.

7. Méthode de production de la mousse de résine silicone modifiée définie dans l'une quelconque des revendications 1 à 6,
dans laquelle la méthode comprend l'injection de la composition de résine liquide expansible dans un moule, suivie de son expansion et de son durcissement.

8. Méthode de production de la mousse de résine silicone modifiée selon la revendication 7,
dans laquelle la méthode comprend l'expansion de la composition de résine liquide expansible avant ou pendant le durcissement.
